# EUROPEAN PATENT SPECIFICATION

(11) **EP 3 167 534 B1**
(45) Date of publication and mention of the grant of the patent: **30.09.2020**
(21) Application number: 14897242.5
(22) Date of filing: 25.08.2014
(51) Int. Cl.: H01M 10/42, H01M 10/44, H01M 2/10, A45C 13/00, A45C 3/04, H01M 10/04

(54) **METHOD OF USING A CABLE TYPE BATTERY**
VERFAHREN ZUR VERWENDUNG EINER KABELARTIGEN BATTERIE
PROCÉDÉ D'UTILISATION DE BATTERIE DE TYPE CÂBLE

(30) Priority: 08.07.2014 KR 20140085496
(43) Date of publication of application: 17.05.2017
(73) Proprietor: LG Electronics Inc., Yeongdeungpo-Gu Seoul 150-721 (KR)
(72) Inventor: CHUN, Sinae, Seoul 137-893 (KR); KIM, Jihwan, Seoul 137-893 (KR); PARK, Sihwa, Seoul 137-893 (KR); LEE, Doyoung, Seoul 137-893 (KR)
(74) Representative: Beyer, Andreas
(86) International application number: PCT/KR2014/007872
(87) International publication number: WO 2016/006755

(56) References cited:
- WO-A1-2014/073971
- WO-A1-2014/073971
- WO-A2-2013/042939
- CN-U- 202 010 279
- CN-Y- 201 088 238
- JP-A- 2001 110 244
- KR-A- 20140 074 450
- KR-B1- 100 672 444
- US-A1- 2011 170 703
- US-A1- 2011 274 954
- US-A1- 2012 009 331
- US-A1- 2012 043 937
- US-A1- 2014 177 399
- N. Owano: "LG Chem turns to stepped, curve and cable batteries", Phys.org , 9 October 2013 (2013-10-09), XP002778371, Retrieved from the Internet: URL:https://phys.org/news/2013-10-lg-chem- cable-batteries.html [retrieved on 2018-02-21]
- YO HAN KWON ET AL: "Cable-Type Flexible Lithium Ion Battery Based on Hollow Multi-Helix Electrodes", ADVANCED MATERIALS, vol. 24, no. 38, 2 October 2012 (2012-10-02), pages 5192-5197, XP055124961, ISSN: 0935-9648, DOI: 10.1002/adma.201202196

## Description

### Technical Field

The present invention relates to a method of using a cable type battery.

### Background Art

Nowadays, due to the development of technology related to various portable devices, a demand for a rechargeable battery more increases. Rechargeable batteries are generally a cylindrical battery, a square-shaped battery, or a pouch type battery. This is because a rechargeable battery is produced by mounting an electrode assembly formed with a negative electrode, a positive electrode, and a separation membrane within a cylindrical or square-shaped metal can or a pouch type case of an aluminum laminate sheet and by injecting an electrolyte into the electrode assembly. Therefore, because a constant space for mounting a rechargeable battery is essentially required, there is a problem that a cylindrical form, a square-shaped form, or a pouch type form of such a rechargeable battery operates as a restriction in developing various forms of portable devices. Accordingly, the development of a new form of rechargeable battery that can easily change a form is requested and the new form of rechargeable battery may be applied to various electronic devices with various methods. Document WO2014/073971 discloses a method of using a cable type battery in a product, namely a luggage item having a control unit arranged to communicate with an external portable device.

### Disclosure of Invention

### Technical Problem

The present invention has been made in an effort to provide various methods of using a cable type battery that can easily change a form as a power supply source for performing a function that can be used in various household items as well as various forms of portable electronic devices and a fixed type electronic device.

### Technical Solution

The present invention provides a method of using a cable type battery according to claim 1.

The product is a shopping bag. The cable type battery may be housed in a handle of the shopping bag or may be housed in a packing material forming a body of the shopping bag. The outputting of image data stored at the memory may include: detecting a product received in the shopping bag; and calling different image data from the memory based on the detected product and outputting the image data through the display. The trigger signal may occur when a user holds the handle and may occur when a predetermined product is received within the shopping bag.

The specific function may include at least one of: a function of outputting image data stored at the memory through a display unit included in the output unit; and a function of outputting audio data stored at the memory through an audio output unit included in the output unit.

The cable type battery may be implemented in a string form. The predetermined user operation may include at least one of operation of winding the cable type battery in the product, operation of unwinding the cable type battery wound in the product, operation of tying a knot with the cable type battery, and operation of untying the knot tied with the cable type battery.

The predetermined user operation may include operation in which the user holds a handle of the shopping bag. The predetermined state change of the product may be a state change in which a product is received in the empty shopping bag.

### Advantageous Effects of Invention

According to the present invention, power of a cable type battery in new, funny, and various forms of products can be used as a driving power source.

### Brief Description of Drawings

FIG. 1 is a block diagram illustrating a configuration of a product that houses a cable type battery;
FIG. 2 is a cross-sectional view illustrating a cable type battery according to an exemplary embodiment of the present invention;
FIG. 3 is a flowchart illustrating an example of a method of using a cable type battery according to an exemplary embodiment of the present invention;
FIG. 4 is a diagram illustrating an example of using a cable type battery as a battery of a flexible display according to an exemplary embodiment of the present invention;
FIG. 5 is a diagram illustrating an example of accessories that can perform a specific function using a housed cable type battery according to an exemplary embodiment of the present invention;
FIG. 6 is a diagram illustrating an example of including and using a cable type battery in a packing string according to an exemplary embodiment of the present invention;
FIG. 7 is a flowchart illustrating another example of a method of using a cable type battery according to an exemplary embodiment of the present invention;
FIG. 8 is a diagram illustrating an example of a shopping bag including a handle including a cable type battery according to an exemplary embodiment of the present invention;
FIG. 9 is a flowchart illustrating another example of a method of using a cable type battery according to an exemplary embodiment of the present invention;
FIG. 10 is a diagram illustrating an example of a tag that houses a cable type battery according to an exemplary embodiment of the present invention;
FIG. 11 is a flowchart illustrating another example of a method of using a cable type battery according to an exemplary embodiment of the present invention;

### Mode for the Invention

Hereinafter, exemplary embodiments of the present invention will be described in detail with reference to the attached drawings, like reference numerals designate like elements throughout the specification, and the drawings and description are to be regarded as illustrative in nature and not restrictive. In general, a suffix such as "module" and "unit" may be used to refer to elements or components. Use of such a suffix herein is merely intended to facilitate description of the specification, and the suffix itself is not intended to give any special meaning or function. Further, detailed descriptions of well-known functions and structures incorporated herein may be omitted to avoid obscuring the subject matter of the present invention. The accompanying drawings are used to help easily understand various technical features and it should be understood that the embodiments presented herein are not limited by the accompanying drawings. While the present invention may be embodied in many different forms, specific embodiments of the present invention are shown in drawings and are described herein in detail, with the understanding that the present invention is to be considered as an exemplification of the principles of the invention and is not intended to limit the invention to the specific embodiments illustrated.

A term of a first and a second may be used for describing various elements, but such elements are not limited by such terms. Such terms are used for distinguishing one element from another element.

Throughout this specification and the claims that follow, when it is described that an element is "coupled" to another element, the element may be "directly coupled" to the other element or "electrically coupled" to the other element through a third element. In contrast, when an element is "directly coupled" to another element, there are no intervening elements present.

Singular forms used here include a plurality of forms unless phrases explicitly represent an opposite meaning.

Further, in the present disclosure, a term "comprise" or "have" indicates presence of a characteristic, numeral, step, operation, element, component, or combination thereof described in a specification and does not exclude presence or addition of at least one other characteristic, numeral, step, operation, element, component, or combination thereof.

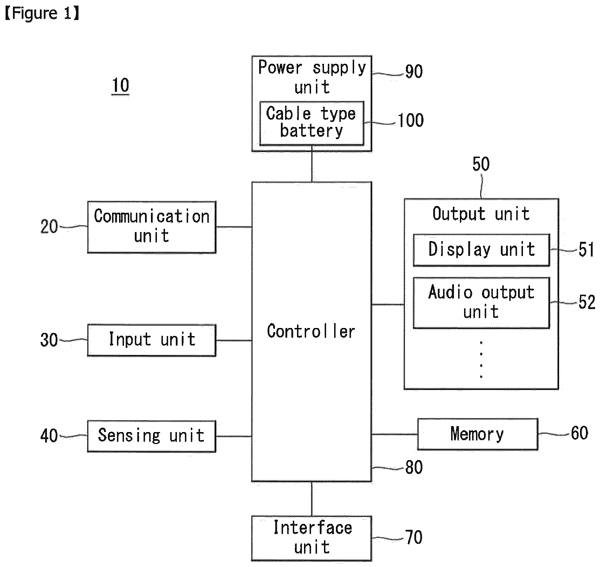

FIG. 1 is a block diagram illustrating a configuration of a product 10 that houses a cable type battery.

Such a product may be various electronic devices using a cable type battery 100 as a power supply source and may be an equipment or clothing that can perform a specific function using power of the cable type battery 100. However, a range of the present invention is not limited thereto.

Referring to FIG. 1, the product 10 includes a communication unit 20, an input unit 30, a sensing unit 40, an output unit 50, a memory 60, an interface unit 70, a controller 80, and a power supply unit 90. Constituent elements of FIG. 1 are not an essential element constituting the product 10, and thus a product described in the present specification may have constituent elements more than or fewer than that of the foregoing constituent elements.

The communication unit 20 can enable the product 10 to perform a communication function with an external device. The communication function may include a long distance communication function with a mobile communication network and a broadcasting communication network and a short range wireless communication function with a WiFi network or a Zigbee communication network and may include a communication function through various wire networks. However, a range of the present invention is not limited thereto.

The input unit 30 may include at least one means for inputting information to the product 10. The at least one means may include various input means such as a camera, a keyboard, a microphone, a touch screen, and a mouse. However, a range of the present invention is not limited thereto.

The sensing unit 40 may include at least one sensing means for detecting various data necessary for operation of the product 10. The sensing means may include an acceleration sensor, a gravity sensor, a temperature sensor, an audio sensor, a fingerprint detection sensor, a light sensor, a motion sensor, and a pressure sensor. However, a range of the present invention is not limited thereto.

The sensing unit 40 may detect a specific operation of a user for the product 10. The sensing unit 40 may detect a state change of the product 10. A detection result of such a sensing unit 40 may become a base to perform a specific function corresponding to a state change or a specific operation of the user in the product 10.

The output unit 50 is a constituent element that generates an output related to visual sense, auditory sense, or tactile sense and may include a display unit 51 and an audio output unit 52, as shown in FIG. 1. Although not shown in FIG. 1, the output unit 50 may further include a haptic module or a light output unit. However, subordinate constituent elements that may be included in the output unit 50 are not limited to the above-described elements.

The memory 60 may store a driving application (i.e., application program) necessary for operating the product 10 and store various image data or audio data. In the memory 60, data acquired while operating the product may be temporarily or permanently stored. The memory 60 may include a volatile memory or a nonvolatile memory.

The interface unit 70 performs a passage function of connecting the product 10 to various kinds of external devices. Such an interface unit 70 may perform a communication port function, a charge port function, a memory card port function, and an identification module port function with the external device. However, a function of the interface unit 70 is not limited to the above-described examples.

The controller 80 controls general operations of the product 10 in addition to operation related to various application programs. The controller 80 processes a signal, data, and information input or output through the foregoing constituent elements or drives an application program stored at the memory 60, thereby providing appropriate information or function to a user or processing the information or function.

Further, in order to drive an application program stored at the memory 60, the controller 80 may control at least a portion of constituent elements described with reference to FIG. 1. Further, for driving of various application programs, the controller 80 may combine and operate at least two of constituent elements included in the product 10.

The power supply unit 90 receives external power and internal power under the control of the controller 80 to supply power to each constituent element included in the product 10. Such a power supply unit 90 may include the cable type battery 100. The cable type battery 100 may be charged based on external power.

When a predetermined state change or a predetermined user operation for the product 10 is detected, the controller 80 may start power supply by the cable type battery 100. Although not described in detail in the drawing, power supply by the cable type battery 100 may be performed by a connection between an electrode of the cable type battery 100 and an electrode provided in the controller 80.

A connection between the electrodes may be a mechanical connection of a physical switch by a physical force occurring based on a state change or a predetermined operation of the user and may be performed by a switching operation of a micro switching element in which a transistor includes a diode based on a control signal occurring based on a state change or a predetermined operation of the user.

In the present specification, power supply from the cable type battery 100 to the product 10 may be performed by the above-described electrode connection. A power supply operation from the cable type battery 100 by a connection between an electrode of the cable type battery 100 and an electrode of the product 10 will become apparent to a person of ordinary skill in the art, and thus in the following exemplary embodiments, a detailed description thereof will be omitted.

Hereinafter, various cable type battery use forms in a product including the cable type battery 100 will be described. First, a cable type battery will be described.

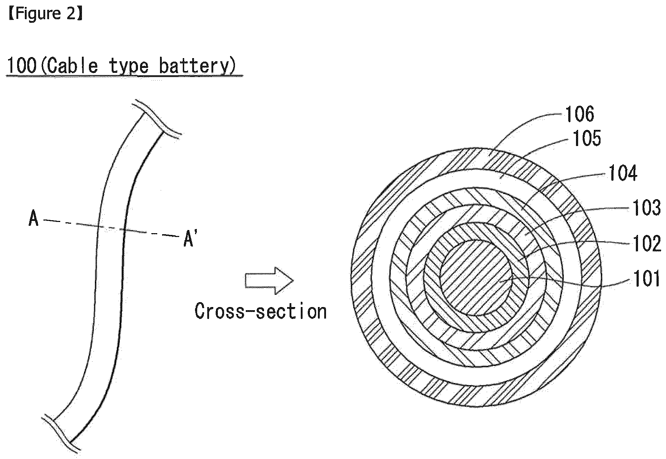

FIG. 2 is a cross-sectional view illustrating a cable type battery 100 according to an exemplary embodiment of the present invention.

A cable type battery 100 applied to an implementation of an exemplary embodiment of the present invention is described in detail in Korean Patent Laid-Open Publication No. 10-2012-0019977, and a cross-section of the cable type battery 100 will simply be described.

The cable type battery 100 is a rechargeable battery and may include a negative electrode current collector 101 that has a predetermined shape of horizontal cross-section and extended in a lengthwise direction, a negative electrode active material pattern layer 102 that has negative electrode active material patterns separately formed at a predetermined gap at an outer surface of the negative electrode current collector, an electrolyte layer 103 that encloses a negative electrode active material pattern layer and that becomes a passage of filled ions, a positive electrode active material pattern layer 104 that has positive electrode active material patterns separately formed at a predetermined gap at a location corresponding to the negative electrode active material patterns at an outer surface of the electrolyte layer, and a positive electrode current collector 105 that encloses an outer surface of a positive electrode active material pattern layer. Here, a predetermined shape means that a shape is not particularly limited and may be any shape that does not depart from the scope of the present invention. A cable type battery according to the present invention has a predetermined shape of horizontal cross-section, and has a linear structure long extended in a lengthwise direction of a horizontal cross-section, and can be freely changed due to flexibility.

A cable type battery 100 may have a protection sheath 106. The protection sheath 106 is an insulator and is formed at an outer surface of the positive electrode current collector 105 in order to protect an electrode from moisture of the air and an external impact. As the protection sheath 106, a normal polymer resin may be used, for example, a Poly Vinyl Chloride (PVC), High-Density Polyethylene (HDPE), or epoxy resin may be used.

In the foregoing description, a cross-section structure of the cable type battery 100 has been simply described, but the present invention is not limited thereto. For example, in order to compensate various problems that may occur by added flexibility due to a configuration of a cable type battery, an appropriate structural design change may be performed.

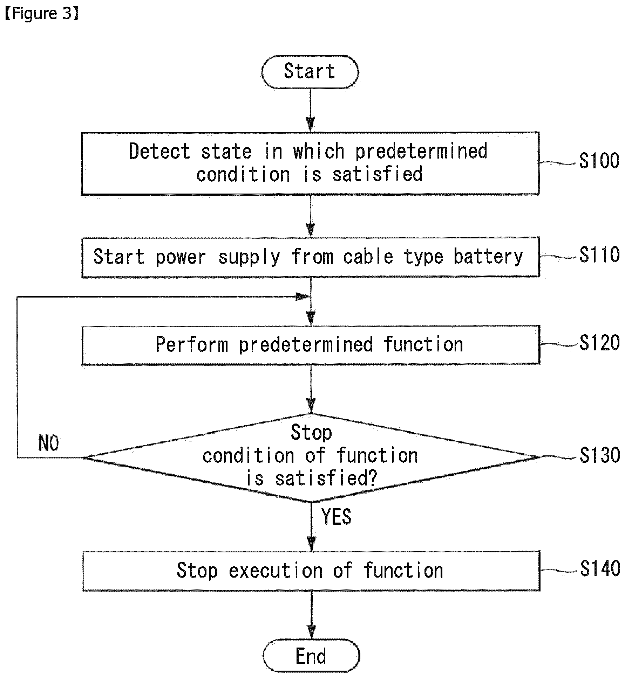

FIG. 3 is a flowchart illustrating an example of a method of using a cable type battery according to an exemplary embodiment of the present invention. Hereinafter, a method of using the cable type battery will be described with reference to necessary drawings.

A controller of a product that houses a cable type battery detects a state in which a predetermined condition is satisfied (S100). Thereafter, the controller starts power supply from the cable type battery housed in the product based on a trigger signal occurring when a predetermined condition is satisfied (S110).

The controller drives a driving application (i.e., application program) stored at a memory based on power supply from the cable type battery and performs a predetermined function (S120). Here, a predetermined function may include an output of image data or audio data stored at the memory, a light output, providing of driving power to constituent elements of a simple product, and acquisition and providing of location information of the product. However, a range of the present invention is not limited thereto.

Thereafter, the controller determines whether a stop condition of an executing function is satisfied (S130). If a stop condition of an executing function is satisfied, the controller stops execution of a function (S140), and if a stop condition of an executing function is not satisfied, the controller continues to execute a function. Here, satisfying of a stop condition may include residual quantity shortage of the cable type battery and stop by a user.

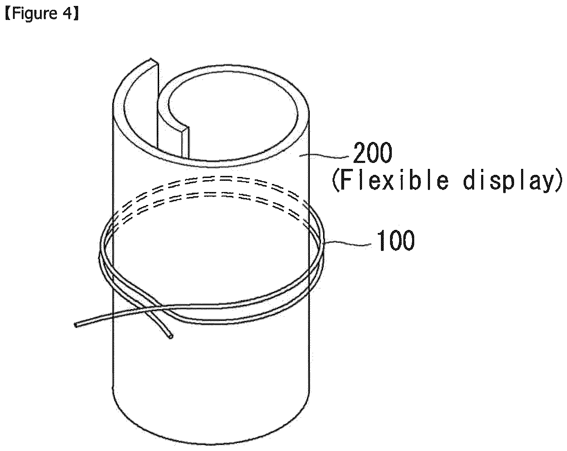

FIG. 4 is a diagram illustrating an example of using a cable type battery 100 as a battery of a flexible display 200 according to an exemplary embodiment of the present invention. Although not described in the drawing, the cable type battery 100 is electrically connected to the flexible display 200.

The cable type battery 100 may be used as a means (i.e., string) for constantly maintaining a form of the flexible display 200. In this case, the cable type battery 100 may be used as a driving power supply source of the flexible display 200. The flexible display 200 may activate only a portion contacting with the cable type battery 100 as a display area. Because a portion that does not contact with the cable type battery 100 of the flexible display 200 is not shown to a user, power supply to the portion is intercepted. Power efficiency of the flexible display 200 may be increased based on such operation. The flexible display 200 may determine whether the cable type battery 100 contacts based on a pressure or an electromagnetic force discharged from the cable type battery 100.

The flexible display 200 may grasp a twist level of the cable type battery 100 to control on/off thereof. For example, if the number wound by the cable type battery 100 is equal to or greater than the predetermined number, the flexible display 200 may be turned on, and if the number wound by the cable type battery 100 is less than the predetermined number, the flexible display 200 may be turned off.

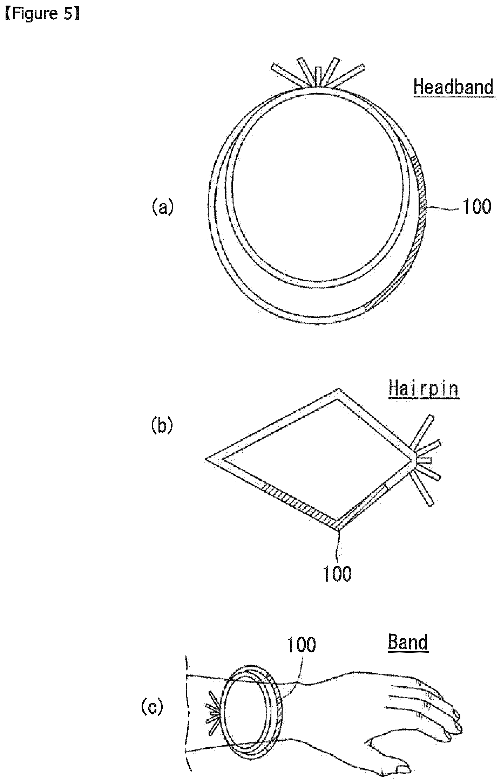

FIG. 5 is a diagram illustrating an example of accessories that can perform a specific function using a housed cable type battery 100 according to an exemplary embodiment of the present invention. The specific function may be a location measuring function, a user body information acquiring function, an alarm function, a display function, and an audio output function. However, a range of the present invention is not limited thereto.

FIG. 5A illustrates an example of using the cable type battery 100 as a battery for supplying power to a headband having an alarm function. A portion of the headband includes the cable type battery 100, but an entire headband may have a form that encloses the cable type battery 100 according to an implementation. This is the same as an example shown in FIGS. 5B and 5C.

An alarm function may be set based on a wearing form of the headband, the number that winds the headband in a user head, an extended level of the headband having elasticity, and a form in which the headband contacts with a user head.

FIG. 5B illustrates an example of using the cable type battery as a power supply source of a headband that can provide a location track function using a Global Positioning System (GPS).

FIG. 5C illustrates an example of using the cable type battery 100 as a power supply source of a band in which a body information acquisition function of a user is mounted. Body information of the user may be a body temperature, a heart rate, and a blood pressure. However, a range of the present invention is not limited thereto. User body information acquired by the band may be changed by a form in which the band is wound in a user wrist, an extended level of the band having flexibility, and a form in which the band contacts with a user wrist.

As described above, accessories formed in a string form may provide an intuitive user interface function of a function mounted in accessories based on flexibility of a string, winding or twist of a string, and a form of a string.

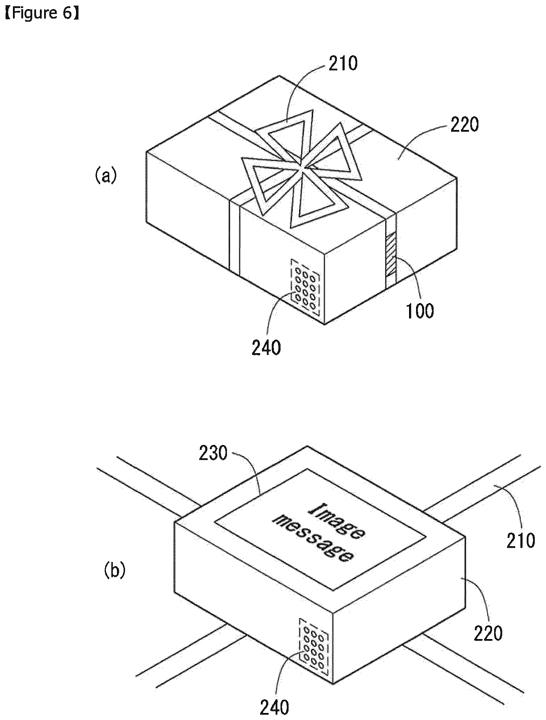

FIG. 6 is a diagram illustrating an example of including and using a cable type battery 100 in a packing string 210 according to an exemplary embodiment of the present invention.

FIG. 6A illustrates that a box 220 is packed using the packing string 210 including the cable type battery 100. FIG. 6B illustrates that a controller (not shown) included in the box 220 controls to display an image message stored at a memory (not shown) using power of the cable type battery 100 in a display 230 and to output an audio signal corresponding to the image message through a speaker 240 when a user unties the packing string 210. That is, when the string 210 is tied, power supply of the cable type battery 100 is intercepted, but a moment in which the string 210 is untied, power supply of the cable type battery 100 is started.

The image message may be an advertisement image for advertisement of a product. The image message may be an image in which a person that gives a gift directly records in order to transfer the gift to a person that receives the gift. Such an image message may be acquired by a camera (not shown) or a microphone (not shown) provided in the box 220 and may be received from an external device through a wire/wireless interface path.

The controller may control a reproduction level of the image message in consideration of a level in which the string 210 is untied. For example, when the string 210 is untied by a half, the controller may reproduce a portion of the image message, and when the string 210 is entirely untied, the controller may reproduce the remaining portion of the image message. According to another implementation of the present invention, the controller may control a reproduction speed or a reproduction level of the image message in consideration of a speed in which the string 210 is untied.

FIG. 6 illustrates an example of outputting an image message in the box 220, and the box 220 may output only a voice message stored at a memory through the speaker 240. That is, the box may include only a speaker instead of a display according to a kind thereof.

When the cable type battery 100 is formed in a string form, a user operation for outputting an image message or a voice message may include operation of winding the cable type battery 100 in a product, operation of tying a knot with the cable type battery 100, and operation of untying a knot by the cable type battery 100 according to another implementation of the present invention.

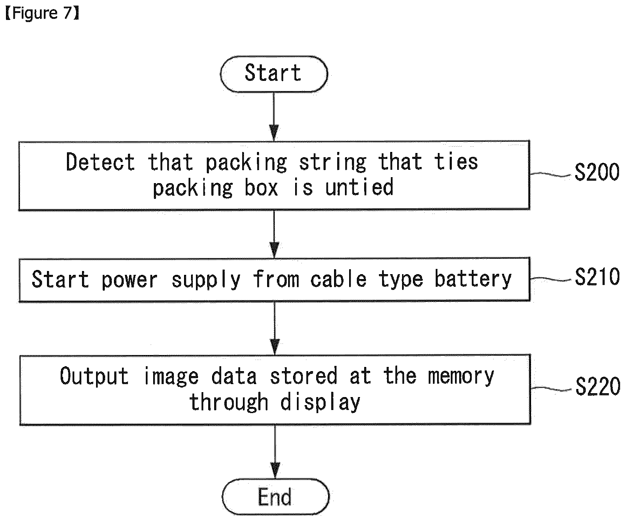

FIG. 7 is a flowchart illustrating another example of a method of using a cable type battery according to an exemplary embodiment of the present invention. Hereinafter, a method of using the cable type battery will be described with reference to necessary drawings. For reference, a method of using the cable type battery is a method of using in an exemplary embodiment described with reference to FIG. 6.

In a state in which a packing box 220 is sealed by a packing string 210 that houses a cable type battery, it is detected that the string 210 is untied (S200). Thereafter, a controller (not shown) provided within the packing box 220 starts power supply from the cable type battery in response to a trigger signal occurring by untying of the string 210 (S210). In this case, the packing box 220 may further include a sensing means (not shown) for detecting that the string 210 is untied.

The controller drives a driving application (i.e., application program) stored at a memory (not shown) based on power supply from the cable type battery and controls a display 230 to output image data stored at the memory (S220). Image data output through the display 230 may be changed according to a product received in the packing box 220. That is, the controller calls different image data from the memory according to a kind of the received product and controls the display 230 to output the image data.

Unlike the present exemplary embodiment, a cable type battery, which is a power supply source for outputting image data may be housed in a packing material constituting a body of the packing box. A means of sealing the packing box may be a packing tape instead of a packing string.

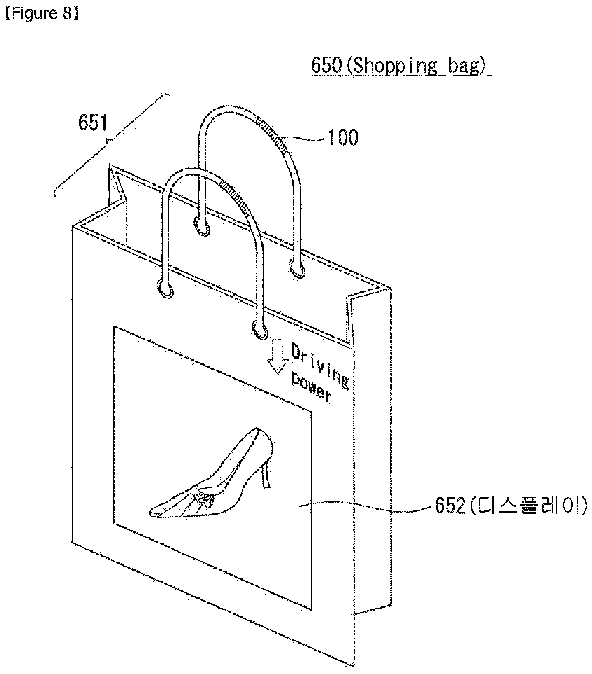

FIG. 8 is a diagram illustrating an example of a shopping bag 650 including a handle 651 including a cable type battery 100 according to an exemplary embodiment of the present invention.

The shopping bag 650 includes a display 652 that receives power from the cable type battery 100 housed in the handle 651 to output image data. Although not described in the drawing, the shopping bag 650 may further include an audio output means that can output an audio signal corresponding to the image data. Driving power of the audio output means may be also supplied from the cable type battery 100.

Image data or an audio signal output through an output means provided in the shopping bag 650 may be image data or an audio signal of a product seller corresponding to the shopping bag 650 or a corresponding product. That is, the shopping bag 650 may be a promotion or sale means of a corresponding product seller or a corresponding product.

When a controller (not shown) of the shopping bag 650 detects that a product is put in the shopping bag, if a grip of the handle 651 of the shopping bag 650 is detected for a predetermined time or more, the controller may control the display 652 to output image data. In this case, the shopping bag 650 should include a separate detect means for detecting the above-described conditions.

When manipulation of a separately provided driving switching means (not shown) is detected, the controller may control the display 652 to output image data.

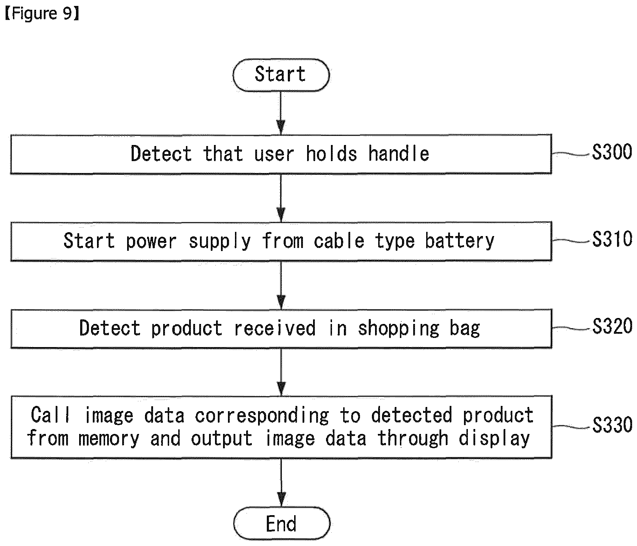

FIG. 9 is a flowchart illustrating another example of a method of using a cable type battery according to an exemplary embodiment of the present invention. Hereinafter, a method of using the cable type battery will be described with reference to necessary drawings. For reference, a method of using the cable type battery is a method of using an exemplary embodiment described with reference to FIG. 8.

When it is detected that a user holds the handle 651 of the shopping bag 650 (S300), a trigger signal for starting an image data output operation stored at a memory (not shown) of the shopping bag 650 occurs, and the controller (not shown) of the shopping bag 650 starts power supply from the cable type battery 100 in response to the trigger signal (S310).

The cable type battery may be housed in a packing material such as paper or vinyl forming a body of the shopping bag 650 instead of the handle 651. The trigger signal may occur when a specific product is received into the shopping bag 650 instead of handle holding of a user.

When power supply from the cable type battery 100 is started, the controller drives a driving application (i.e., application program) stored at the memory and detects a product received in the shopping bag 650 (S320). It may be detected whether the product is received by a short range wireless communication module housed in the shopping bag 650 and a communication means provided within the product or wireless communication with a tag of the product.

When reception of the product is detected, the controller calls image data corresponding to the detected product from the memory and outputs the image data through the display 652 (S330). The output image data may be different according to a kind of the detected product.

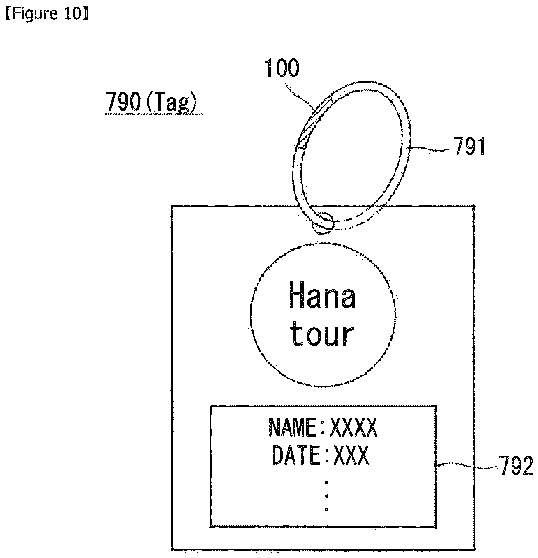

FIG. 10 is a diagram illustrating an example of a tag 790 that houses a cable type battery 100 according to an exemplary embodiment of the present invention.

The cable type battery 100 is housed in a fixing string 791 of the traveling bag tag 790. Power of the cable type battery 100 may be used as driving power of a display 792 of the tag 790. In a display area, an owner name, a travel date, etc., may be displayed. However, a range of the present invention is not limited thereto.

A form of such a tag may be a traveling bag tag shown in FIG. 10, may be a bookmark, and may be a tag of a specific product. When the tag is a bookmark, in the display, a page and a title of a book may be displayed. When the tag is a tag of a specific product, in the display, a product description may be displayed.

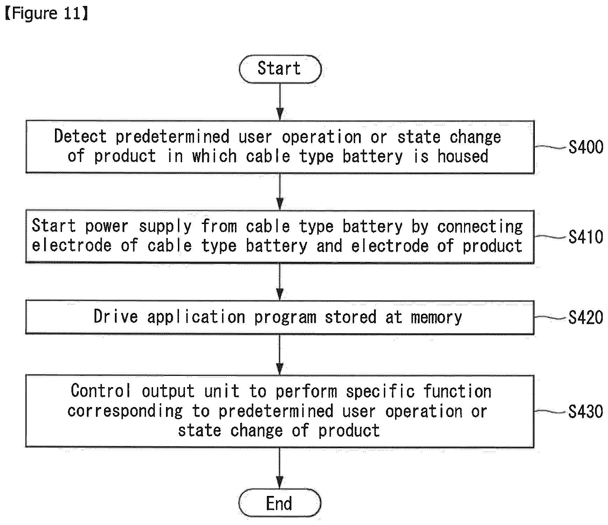

FIG. 11 is a flowchart illustrating another example of a method of using a cable type battery according to an exemplary embodiment of the present invention. Hereinafter, a method of using the cable type battery will be described with reference to necessary drawings.

A controller 80 of a product 10 that houses the cable type battery 100 according to an exemplary embodiment of the present invention detects a predetermined user operation of the product 10 or a predetermined state change of the product (S400). Such a user operation or a state change of the product 10 may be detected by at least one sensing means provided in the product 10 and may be detected as the controller 80 directly detects an electromagnetic signal occurring by the user operation or a state change of the product 10.

When the product 10 is a shopping bag, the predetermined user operation of the product 10 may be operation in which the user holds a handle of the shopping bag, and the state change of the product 10 may be a state change in which the product is received in an empty shopping bag. When the cable type battery 100 is implemented in a string form, a predetermined user operation of the product 10 may include operation of winding the cable type battery 100 in the product 10, operation of unwinding the cable type battery 100 wound in the product 10, operation of tying a knot with the cable type battery 100, and operation of untying a knot of the cable type battery 100. The above-described examples are an example of a user operation of the product 10 or a state change of the product 10 for starting a method of using a cable type battery according to an exemplary embodiment of the present invention and a range of the present invention is not limited thereto.

When a predetermined user operation of the product 10 or a state change of the product 10 is detected, the controller 80 starts power supply from the cable type battery 100 by connecting an electrode of the cable type battery 100 and an electrode of the product 10 based on the detect result (S410). A connection between the electrodes may be a mechanical connection of a physical switch by a physical force occurring by a predetermined user operation or state change and may be performed by a switching operation of a micro switching element in which a transistor includes a diode based on a control signal occurring by the predetermined user operation or state change.

When power is supplied from the cable type battery 100, the controller 80 drives an application program stored at the memory 60 based on power supplied from the cable type battery 100 (S420) and controls the output unit 50 to perform a specific function corresponding to the predetermined user operation or the predetermined state change of the product (S430).

The specific function may be a function of outputting image data stored at the memory 60 through the display unit 51, a function of outputting audio data stored at the memory 60 through the audio output unit 52, and a function of performing both. The specific function may include a light emitting operation using a light emitting element included in the output unit 50 and vibration generation using a vibration generation element included in the output unit 50. However, a range of a specific function performed by the product 10 is not limited to the above-described examples.

A method of using a cable type battery according to an exemplary embodiment of the present invention may be performed by a combination of the above-described respective exemplary embodiments.

The foregoing present invention may be implemented with a computer readable code in a medium on which a program is recorded. A computer readable medium includes an entire kind of record devices that store data that can be read by a computer system. The computer readable medium may include, for example, a Hard Disk Drive (HDD), a Solid State Disk (SSD), a Silicon Disk Drive (SDD), a Read-Only Memory (ROM), a Random-Access Memory (RAM), a Compact Disc Read-Only Memory (CD-ROM), a magnetic tape, a floppy disk, and a light data storage device and may be implemented in a form of a carrier wave (e.g., transmit through Internet). Further, the computer may include a controller of a product that houses a cable type battery.

### Sequence Listing Free Text

- 10:: product
- 51:: display unit
- 52:: audio output unit
- 60:: memory
- 100:: cable type battery

## Claims

1. A method of using a cable type battery (100) in a product (10) comprising a cable type battery (100), a memory (60), and an output unit (50), a sensing unit (40) the method comprising:
detecting (S100) via the sensing unit a predetermined user operation for the product (10) or a predetermined state change of the product (10);
starting (S110) power supply from the cable type battery (100) by connecting an electrode of the cable type battery (100) and an electrode of the product (10) based on the detected result; and
controlling (S120) the output unit to perform a specific function corresponding to the predetermined user operation or the predetermined state change of the product (10) by driving an application program stored in the memory (60) based on power supplied from the cable type battery (100),
wherein the specific function comprises at least one of:
a function of outputting image data stored in the memory through a display unit included in the output unit; and
a function of outputting audio data stored in the memory through an audio output unit included in the output unit,
**characterized in that** the product (10) is a shopping bag, and the predetermined state change of the product (10) comprises a state change in which an object is received (S320) in the empty shopping bag.

2. The method of claim 1, wherein the cable type battery is implemented in a string form, and
the predetermined user operation comprises at least one of operation of winding the cable type battery in the product, operation of unwinding the cable type battery wound in the product, operation of tying a knot with the cable type battery, and operation of untying the knot tied with the cable type battery.

3. The method of claim 1, wherein the predetermined user operation comprises an operation in which the user holds a handle of the shopping bag.

4. The method of claim 1, wherein the cable type battery is housed in a handle of the shopping bag.

5. The method of claim 1, wherein the cable type battery is housed in a packing material forming a body of the shopping bag.

6. The method of claim 1, wherein the method further comprises detecting the object received in the shopping bag, and wherein
the image data or the audio data is changed according to a kind of the detected object.

## Patentansprüche

1. Verfahren zur Verwendung einer kabelartigen Batterie (100) in einem Produkt (10) umfassend eine kabelartige Batterie (100), einen Speicher (60), eine Ausgabeeinheit (50) und eine Erfassungseinheit (40), wobei das Verfahren umfasst:
Erfassen (S100) einer vorbestimmten Benutzertätigkeit bezüglich des Produkts (10) oder einer vorbestimmten Zustandsänderung des Produkts (10) mittels der Erfassungseinheit,
Starten (S110) einer Energiezufuhr aus der kabelartigen Batterie (100) durch Verbinden einer Elektrode der kabelartigen Batterie (100) und einer Elektrode des Produkts (10) basierend auf dem erfassten Ergebnis, und
Steuern (S120) der Ausgabeeinheit zum Ausführen einer bestimmten Funktion, die der vorbestimmten Benutzertätigkeit oder der vorbestimmten Zustandsänderung des Produkts (10) entspricht, durch Ansteuern eines in dem Speicher (60) gespeicherten Anwendungsprogramms basierend auf von der kabelartigen Batterie (100) gelieferter Energie,
wobei die bestimmte Funktion wenigstens eine umfasst aus:
einer Funktion des Ausgebens von in dem Speicher gespeicherten Bilddaten durch eine in der Ausgabeeinheit enthaltene Anzeigeeinheit, und
einer Funktion des Ausgebens von in dem Speicher gespeicherten Audiodaten durch eine in der Ausgabeeinheit enthaltene Audioausgabeeinheit,
**dadurch gekennzeichnet, dass** das Produkt (10) eine Einkaufstasche ist und die vorbestimmte Zustandsänderung des Produkts (10) eine Zustandsänderung umfasst, bei der ein Gegenstand in der leeren Einkaufstasche aufgenommen wird (S320).

2. Verfahren nach Anspruch 1, bei dem die kabelartige Batterie in einer Schnurform implementiert ist und
die vorbestimmte Benutzertätigkeit wenigstens eines umfasst aus einer Tätigkeit des Aufwickelns der kabelartigen Batterie in dem Produkt, einer Tätigkeit des Abwickelns der in dem Produkt aufgewickelten, kabelartigen Batterie, einer Tätigkeit des Bindens eines Knotens mit der kabelartigen Batterie und einer Tätigkeit des Lösens des mit der kabelartigen Batterie gebundenen Knotens.

3. Verfahren nach Anspruch 1, bei dem die vorbestimmte Benutzertätigkeit eine Tätigkeit umfasst, bei der der Benutzer einen Griff der Einkaufstasche hält.

4. Verfahren nach Anspruch 1, bei dem die kabelartige Batterie in einem Griff der Einkaufstasche untergebracht ist.

5. Verfahren nach Anspruch 1, bei dem die kabelartige Batterie in einem Verpackungsmaterial untergebracht ist, das einen Körper der Einkaufstasche bildet.

6. Verfahren nach Anspruch 1, bei dem das Verfahren ferner ein Erfassen des in der Einkaufstasche aufgenommenen Gegenstands umfasst, und bei dem
die Bilddaten oder die Audiodaten in Übereinstimmung mit einer Art des erfassten Gegenstands geändert werden.

## Revendications

1. Procédé d'utilisation d'une batterie de type câble (100) dans un produit (10) comprenant une batterie de type câble (100), une mémoire (60), une unité de sortie (50), et une unité de détection (40), le procédé consistant à :
détecter (S100) par l'intermédiaire de l'unité de détection une opération d'utilisateur pour le produit (10) ou un changement d'état prédéfini du produit (10) ;
démarrer (S110) une alimentation électrique en provenance de la batterie de type câble (100) par connexion d'une électrode de la batterie de type câble (100) et une électrode du produit (10) en fonction du résultat détecté ; et
amener (S120) l'unité de sortie à exécuter une fonction spécifique correspondant à l'opération de l'utilisateur prédéfinie ou au changement d'état prédéfini du produit (10) par commande d'un programme d'application mémorisé dans la mémoire (60) en fonction de l'électricité fournie par la batterie de type câble (100),
la fonction spécifique comprenant :
une fonction de sortie de données d'image mémorisées dans la mémoire par une unité d'affichage comprise dans l'unité de sortie ; et/ou
une fonction de sortie de données audio mémorisées dans la mémoire par une unité de sortie audio comprise dans l'unité de sortie,
**caractérisé en ce que** le produit (10) étant un sac à emplettes, et le changement d'état prédéfini du produit (10) comprenant un changement d'état dans lequel un objet est logé (S320) dans le sac à emplettes vide.

2. Procédé selon la revendication 1, la batterie de type câble étant mise en œuvre en forme de cordon, et
l'opération de l'utilisateur prédéfinie comprenant au moins une opération d'enroulement de la batterie de type câble dans le produit et/ou une opération de déroulement de la batterie type câble enroulée dans le produit et/ou une opération de nouage avec la batterie de type câble, et/ou une opération de dénouage avec la batterie de type câble.

3. Procédé selon la revendication 1, l'opération d'utilisateur prédéfinie comprenant une opération dans laquelle l'utilisateur tient la poignée du sac à emplettes.

4. Procédé selon la revendication 1, la batterie de type câble étant logée dans une poignée du sac à emplettes.

5. Procédé selon la revendication 1, la batterie de type câble étant logée dans un matériau d'emballage formant un corps du sac à emplettes.

6. Procédé selon la revendication 1, le procédé consistant en outre à détecter l'objet logé dans le sac à emplettes, et les données d'image ou les données audio étant modifiées en fonction du genre de l'objet détecté.
